# EUROPEAN PATENT SPECIFICATION

(11) **EP 1 040 681 B1**
(45) Date of publication and mention of the grant of the patent: **17.05.2006**
(21) Application number: 98964133.7
(22) Date of filing: 18.12.1998
(51) Int. Cl.: H04Q 3/00

(54) **TELEVOTING SERVICE FOR AN ADVANCED INTELLIGENT NETWORK**
FERNUMFRAGEDIENSTE FÜR EIN FORTGESCHRITTENES INTELLIGENTES NETZ
SERVICE DE TELESONDAGE POUR RESEAU INTELLIGENT DE POINTE

(30) Priority: 18.12.1997 US 993435
(43) Date of publication of application: 04.10.2000
(73) Proprietor: Alcatel USA Sourcing, L.P., Plano, TX 75075 (US)
(72) Inventor: SHAH, Tasvir, Irving, TX 75063 (US); PETERSON, Mark, A., Coppell, TX 75019 (US); JACUNSKI, Conrad, L., Plano, TX 75074 (US)
(86) International application number: PCT/US1998/027067
(87) International publication number: WO 1999/031899

(56) References cited:
- WO-A-96/32818

## Description

### TECHNICAL FIELD OF THE INVENTION

This invention is related in general to the field of telecommunications. More particularly, the invention is related to a televoting service for an advanced intelligent network (AIN).

### BACKGROUND OF THE INVENTION

With the advent of the advanced intelligent network (AIN), it has become possible to rapidly design and introduce many new enhanced telecommunications services that provide added flexibility and convenience in how we use our telephone equipment.

The advanced intelligent network typically includes switches or service switching points (SSPs) coupled to signal transfer points (STPs), which are in turn coupled to service control points (SCPs). The interconnections between service switching points and service control points employ the signaling system number 7 or SS7 protocol for sending query messages associated with the execution of services. The service control points executes service logic programs which define the services and further store and maintain databases that have data associated with the services. The service control points are further coupled to a service management system (SMS), which supports the operations, administrations, management, and provisioning (OAM&P) needs of the network. The advanced intelligent network further includes intelligent peripherals, which are coupled to service switching points and the service management system, and provide pre-recorded voice announcements, voice synthesis, and other functionalities that generally facilitate interaction with service subscribers and customers. The connection between the service management system and other network nodes is typically via X.25 links. In the advanced intelligent network, telecommunications services are typically defined in a service creation environment (SCE) node by the service provider and then relayed to the service management system, which disseminates the service logic programs to the rest of the network for execution.

The International Telecommunications Union (ITU) and other standard setting bodies have promulgated recommendations and requirements for advanced intelligent network services. One service is the televoting service, which basically allows a service subscriber to receive telephone calls from callers intending to register their opinions or vote on a particular topic of interest. However, these standards do not spell out how this service is to be implemented and the specific service features that support this service.

International Application WO 96/32818 discloses a method of televoting in an intelligent network. In the method, a point comprising a service control function SCF sends a televoting activation request to a point comprising a service switching function SSF, whereby instructions concerning the announcement to be given to a televoter are given in connection with the activation request. The point comprising the service switching function SSF counts the calls made by the users of the telephone network to predetermined telephone numbers and gives an individual televoter an announcement concerning the vote. Information on the number of calls is forwarded to the service control function SCF of the intelligent network.

### SUMMARY OF THE INVENTION

Accordingly, there is a need for a televoting service for the advanced intelligent network.

In an aspect of the invention, a televoting service includes the steps of receiving, at a service switching point, a telephone number entered by a caller associated with a call, and sending a query to the service control point coupled to the service switching point. Thereafter at the service control point, the received telephone number is verified as a televoting service number for registering a vote. The televoting service further includes determining one of a plurality of routing options for processing the call in response to service transition logic associated with the caller, with the plurality of routing options including standard routing, originating call screening, origin dependent routing, time dependent routing, and call distribution. The telephone number is then translated to a directory number by consulting a televoting service transition logic according to the determined routing option. The call is then completed to the directory number, and the vote is registered.

### BRIEF DESCRIPTION OF THE DRAWINGS

For a better understanding of the present invention, reference may be made to the accompanying drawings, in which:
FIGURE 1 is a simplified block diagram of an advanced intelligent network (AIN);
FIGURE 2 is a simplified flowchart of an embodiment of service switching point call flow for televoting according to the teachings of the present invention;
FIGURE 3 is a simplified flowchart of an embodiment of service control point route selection call flow for televoting according to the teachings of the present invention;
FIGURE 4 is a simplified flowchart of an embodiment of service control point originating call screening call flow for televoting according to the teachings of the present invention;
FIGURE 5 is a simplified flowchart of an embodiment of service control point origin dependent routing call flow for televoting according to the teachings of the present invention;
FIGURE 6 is a simplified flowchart of an embodiment of service control point time dependent routing call flow for televoting according to the teachings of the present invention;
FIGURE 7 is a simplified flowchart of an embodiment of service control point call distribution call flow for televoting according to the teachings of the present invention;
FIGURE 8 is a simplified message flow diagram of an embodiment of the televoting call routing to a directory number according to the teachings of the present invention;
FIGURE 9 is a simplified message flow diagram of an embodiment of the televoting call routing to a service switching point announcement according to the teachings of the present invention;
FIGURE 10 is a simplified message flow diagram of an embodiment of the televoting call routing to an intelligent peripheral announcement according to the teachings of the present invention;
FIGURE 11 is a simplified message flow diagram of an embodiment of the televoting call routing to a service switching point announcement requesting caller response according to the teachings of the present invention; and
FIGURE 12 is a simplified message flow diagram of an embodiment of the televoting call routing to an intelligent peripheral announcement requesting caller response according to the teachings of the present invention.

### DETAILED DESCRIPTION OF THE INVENTION

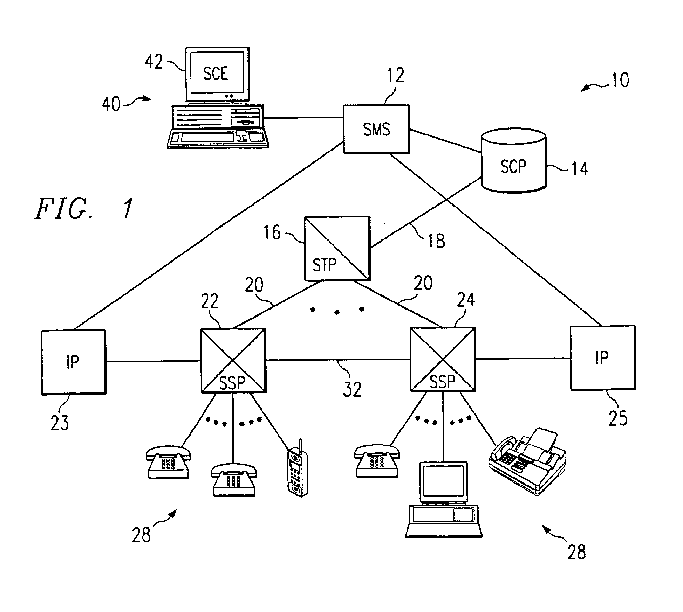

The preferred embodiments of the present invention are illustrated in FIGURES 1-12, like reference numerals being used to refer to like and corresponding parts of the various drawings.

Referring to FIGURE 1, a simplified block diagram of an exemplary advanced intelligent network (AIN) is shown. FIGURE 1 shows an exemplary telecommunications network 10 such as an advanced intelligent network (AIN) or intelligent network (IN). Network 10 includes a service management system (SMS) 12 which interfaces with a service control point (SCP) 14 via an industry standard protocol such as X.25. Service management system 12 provides network information, database management, and administrative support for network 10. Service management system 12 generally interfaces with service control point 14 for provisioning, database management, service control point application program management, and collecting traffic metering and measurement data. Service control point 14 is also directly linked to signal transfer point 16 via an SS7 (signaling system number 7) link set 18. Based on present industry practice, an SS7 link set may include up to sixteen 56 or 64 Kbits/second links. Signal transfer point 16 is further coupled to one or more service switching points (SSPs) 22 and 24, which perform the switching and call handling functions in the network via SS7 link sets 20. An intelligent peripheral (IP) 23 is coupled to service switching point 22 and another intelligent peripheral 25 is coupled to service switching point 24. Intelligent peripherals 23 and 25 may provide an interface to callers and users such as pre-recorded or voice synthesized announcements and prompts.

Service control point 14 is a transaction based processing system whose primary responsibility is to respond to queries from service switching points 22 and 24 for data needed to complete routing a call. Service switching points 22 and 24 are part of the public switched telephone network and are coupled to the customer premises equipment (CPE) 28 of telephone service subscribers.

Network services are generally implemented in a service creation environment (SCE) 40 through a graphical user interface 42 to produce service logic programs that are then downloaded to network elements such as service management system 12, and/or service control point 14, where they are executed.

Televoting is a service in which a service subscriber has the capability to receive phone calls intended to register opinion on a certain topic of general interest. The televoting service allows a network operator to temporarily assign one or more directory numbers to a service subscriber for a specific period of time during which the votes are registered and counted. Optionally, a single directory number can be assigned to the service provider and the caller is prompted for an additional digit indicative of his/her vote.

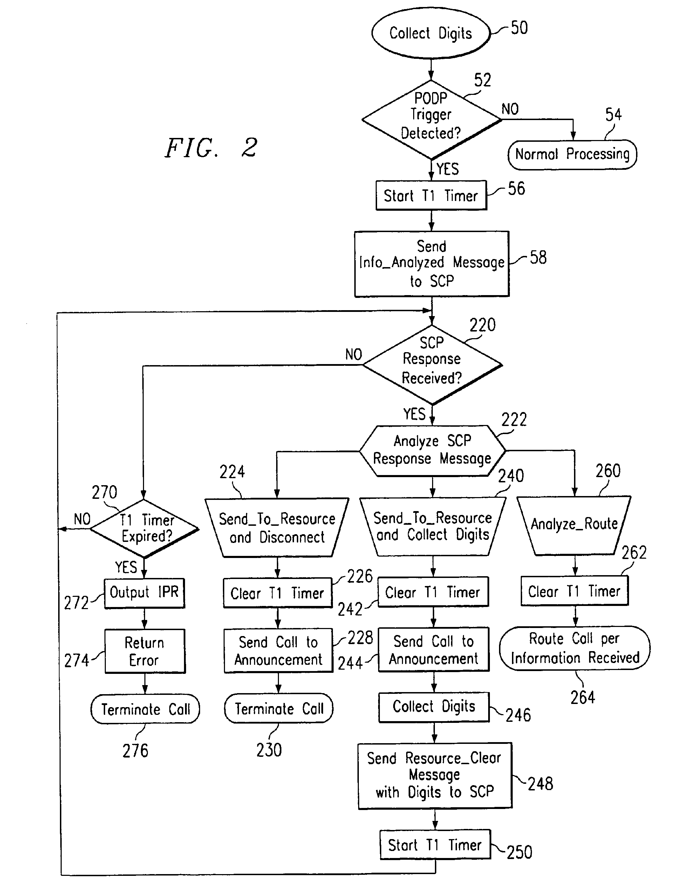

Referring to FIGURE 2, a simplified flowchart of an embodiment of the service switching point televoting call flow is shown. In block 50, the digits entered or dialed by the caller are collected by the service switching point. The caller may dial a televoting service access number from any public or private telephone and from any location within a defined service area in order to reach the televoting service subscriber. The service switching point detects whether a public office dialing plan (PODP) trigger is detected, as shown in block 52. If no trigger is detected, then normal call processing proceeds, as shown in block 54. If a PODP trigger is detected, then the service switching point starts a T1 timer and sends an info_analyzed message containing the collected digits to the service control point for further processing, as shown in blocks 56 and 58. The T1 timer is set to a predetermined time period, which expires after the predetermined time period elapses before the receipt of a response from the service control point.

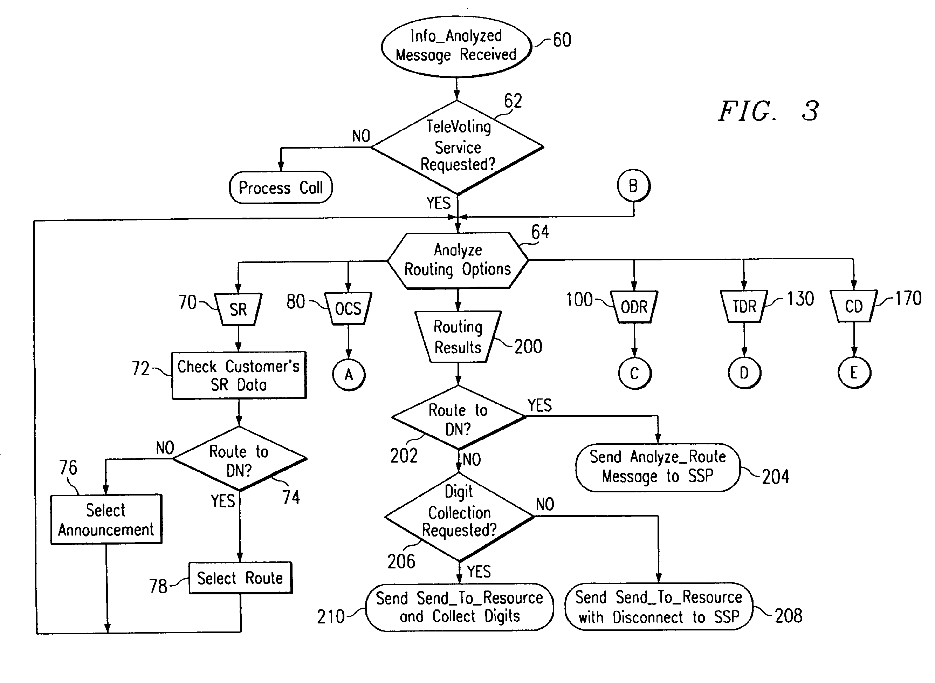

In FIGURE 3 block 60, the service control point receives the info_analyzed message from the service switching point. The service control point analyzes the collected digits to determine whether they represent the televoting service access number. If they do not, as determined in block 62, then the call is processed as another type of AIN service request. Otherwise, the service control point analyzes the service subscriber's service transition logic to determine the routing options, as shown in block 64. The service transition logic may indicate that a standard routing (SR) service feature is to be selected, as shown in block 70. The service subscriber's standard routing data is consulted, as shown in block 72. The service control point determines whether the call is to be routed to a primary directory number (DN), as shown in block 74. If not, then an announcement is selected to be played to the caller, as shown in block 76, and execution returns to block 64. If the standard routing data indicates that routing to the directory number is to be performed, then the route or terminating destination address is determined, as shown in block 78. Execution returns to block 64 to continue call processing.

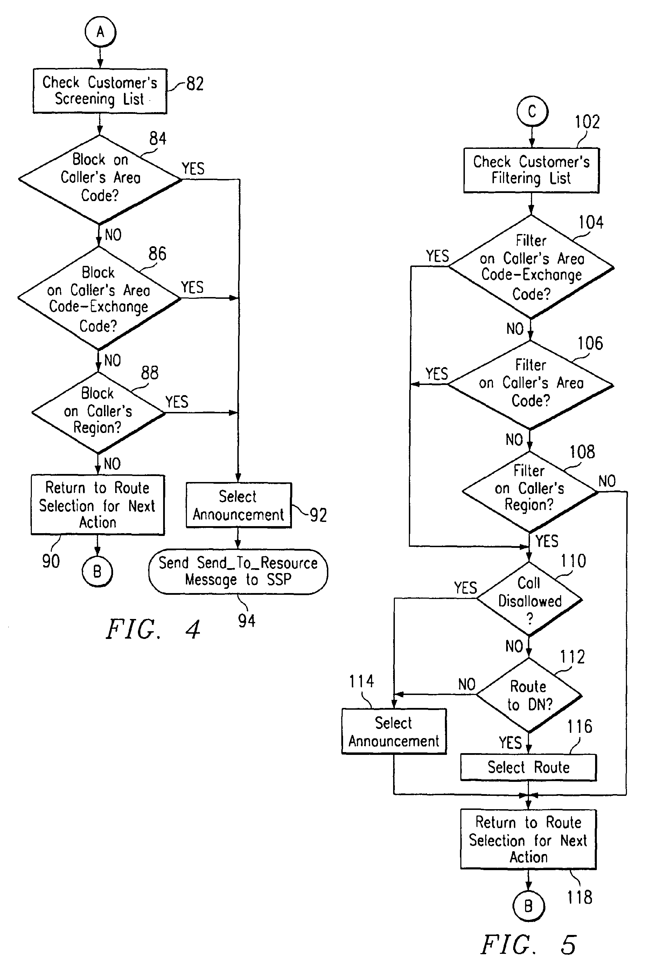

The service transition logic or routing selection may indicate that an originating call screening (OCS) service feature is active, as shown in block 80. Referring to FIGURE 4, a simplified flowchart of an embodiment of originating call screening is shown. In block 82, the service subscriber's call screening data is obtained or accessed. The service control point then determines whether the call should be blocked based on the caller's area code, area code-exchange code, or region, as shown in blocks 84-88. If any of the call screening criteria is in effect, then an appropriate announcement is selected by the service control point and a call disconnect flag is sent in a send_to_resource message to the service switching point, as shown in blocks 92 and 94. If none of the call screening criteria are in effect, then execution returns to route selection for the next action, as shown in block 90.

The service subscriber's service transition logic may indicate that origin dependent routing (ODR) is active, as shown in block 100. Referring to FIGURE 5, a simplified flowchart of origin dependent routing is shown. In block 102, the service control point accesses the service subscriber's call filtering data to determine whether to filter the call. If filtering is not in effect, then execution returns to block 64 in FIGURE 3 to continue route selection, as shown in block 118. If filtering is in effect, the service control point determines whether filtering is based on the caller's area code-exchange code, area code, or region, as shown in blocks 104-108. If the call is disallowed (block 110), then an appropriate announcement is selected in block 114 and execution returns to block 64 of FIGURE 3. If, based on the filtering criteria, the call is allowed, then execution also returns to block 64 of FIGURE 3 to continue route selection. Based on subsequent route selection, an alternate route may be selected to route the call.

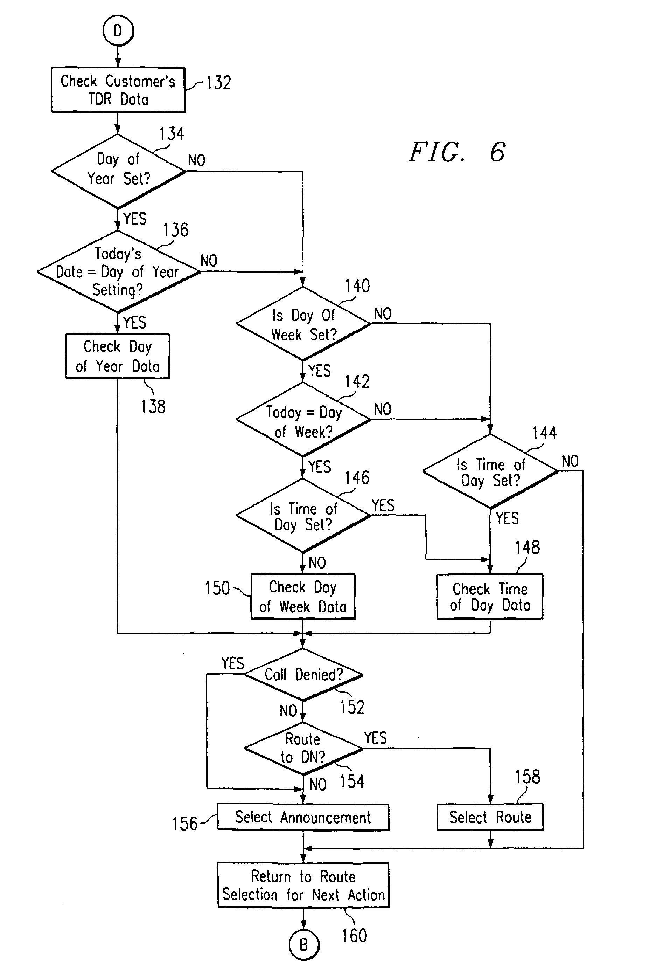

The service subscriber's service transition logic may indicate that the call is to be routed based on time dependent routing, as shown in block 130. A simplified flowchart of an embodiment of time dependent routing is shown in FIGURE 6. In block 132, the service control point accesses the service subscriber's time dependent routing data. The service control point determines whether the day of year routing criteria is set, as shown in block 134. If the day of year criteria is set, then it further makes a determination of whether today's date is equal to the day of year setting, as shown in block 136. If the dates are equal, then the service control point further consults the day of year data and determines whether the call is denied, as shown in block 152.

If the day of year criteria is not set or today's date is not equal to the day of year setting, then the service control point determines whether the day of week criteria is set, as shown in block 140. If this criteria is set, then the service control point determines whether today is the day of week specified by the criteria, as shown in block 142. If today is not the specified day of week, then the service control point further determines whether the time of day criteria is set, as shown in block 144. If this criteria is not set, then execution proceeds to block 160 to return to the route selection block 64 in FIGURE 3. If the time of day criteria is set, then the service control point consults the time of day data and determines whether the call is denied, as shown in blocks 148 and 152.

If, on the other hand, the service control point determines in block 142 that today is the day of week specified, then it further checks whether the time of day criteria is set, as shown in block 146. If not, then the service control point consults the day of week data to determine whether the call is denied, as shown in blocks 150 and 152. It may be seen that the day of year criteria takes precedence over the day of week and time of day criteria; and the day of week criteria takes precedence over the time of day criteria.

At block 152, if the service control point determines that the call is denied, then an appropriate announcement is selected in block 156 and execution returns to block 64 of FIGURE 3 to continue route selection. If the call is not denied, as determined in block 152, then the service control point further determines whether routing should be done to a directory number, as shown in block 154. If directory number routing is chosen, then the route is selected, as shown in block 158, and execution proceeds to block 160 to continue route selection. If the directory route is not chosen, then an appropriate announcement is selected in block 156 and execution proceeds to block 160 for continued route selection.

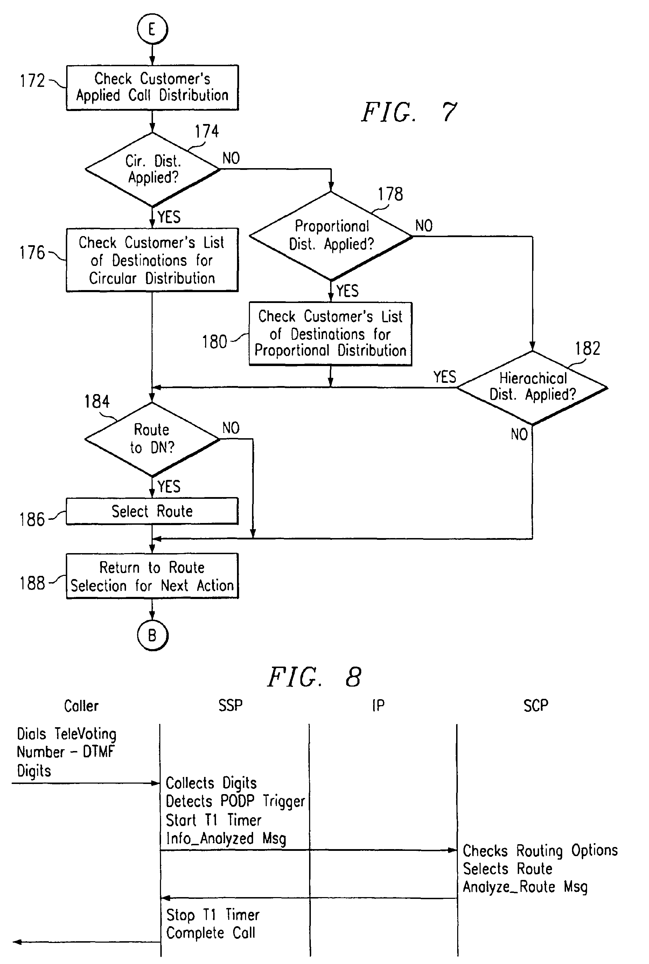

Returning to FIGURE 3, the service subscriber's service transition logic may indicate that the route should be selected based on a call distribution service feature, as shown in block 170. FIGURE 7 is a simplified flowchart of an embodiment of call distribution as applied to the televoting service of the present invention. In block 172, the service control point checks the service subscriber's call distribution data and determines whether any call distribution criteria is to be applied. Call distribution criteria include circular distribution (block 174), proportional distribution (block 178), and hierarchical distribution (block 182). In circular distribution, the calls are routed to more than one destination number in a round robin manner to achieve uniform load. In proportional distribution, the calls are routed to more than one destination based on a proportional allocation specified by the service subscriber. In hierarchical distribution, the calls are routed according to the service subscriber's specified priority assigned to each destination. The destination with the highest priority receives the phone call if it is available. If any of the call distribution criteria is selected, then the service subscriber's destination address list for each criteria is accessed to determine the route, as shown in blocks 176 and 180. The service control point then determines whether the call should be routed to a directory number, as shown in block 184. If not, then execution proceeds to block 188, which returns to block 64 in FIGURE 3 for continued route selection. If routing to the directory number is chosen, then the route is determined in block 186, and execution proceeds to block 188.

Returning to FIGURE 3, the routing results are examined to determine whether the call is to routed to a destination number, as shown in blocks 200 and 202. If the call is to be routed to a directory number, then this number is contained in a analyze_route message and sent to the service switching point for call completion, as shown in block 204. If the call cannot be routed to a particular directory number, then in block 206 the service control point determines whether an additional vote digit is required to allow the caller to indicate his/her vote. If not, then the service control point sends a send_to_resource message to the service switching point to disconnect the call, as shown in block 208. If an additional digit is required, then the service control point sends a send_to_resource message to the service switching point to instruct it to collect the vote digit, as shown in block 210.

Returning to FIGURE 2, the service switching point checks whether a response is received from the service control point, as shown in block 220. If a response is not yet received, the service switching point further checks the T1 timer in block 270 to determine if it has expired. If the T1 timer has not expired, then the service switching point keeps waiting until the T1 timer is expired. The service switching point then generates an information problem report (IPR), returns an error, and terminates the call, as shown in blocks 272-276. An appropriate announcement may be played to the caller to inform the caller and to ask the caller to place the call at a later time.

If a response is received from the service control point, then the service switching point analyzes the response, as shown in block 222. If the response is a send_to_resource message with a disconnect flag, as shown in block 224, then the service switching point clears the T1 timer in block 226, and sends the call to the intelligent peripheral or another process which plays an appropriate announcement before the call is terminated, as shown in blocks 228 and 230.

If the response from the service control point is a send_to_resource message with an instruction to collect one or more vote digits, as shown in block 240, then the service switching point clears the T1 timer in block 242, and sends the call to the intelligent peripheral or another process which plays an appropriate announcement to prompt the caller to enter a digit, as shown in block 244. The announcement may provide the caller with a menu of choices upon which the caller may select with the entry of a digit. The service switching point then collects the digit(s), as shown in block 246. The collected vote digit is then sent to the service control point in a resource_clear message, and the T1 timer is restarted, as shown in blocks 248 and 250. The service control point, with the receipt of this additional vote digit, is then capable of determining how the call is to be routed, and may return an analyze_route message to the service switching point. If the service switching point receives an analyze_route message from the service control point, as shown in block 260, then the service switching point clears the T1 timer in block 262, and routes the call according to the routing information supplied by the service control point, as shown in block 264.

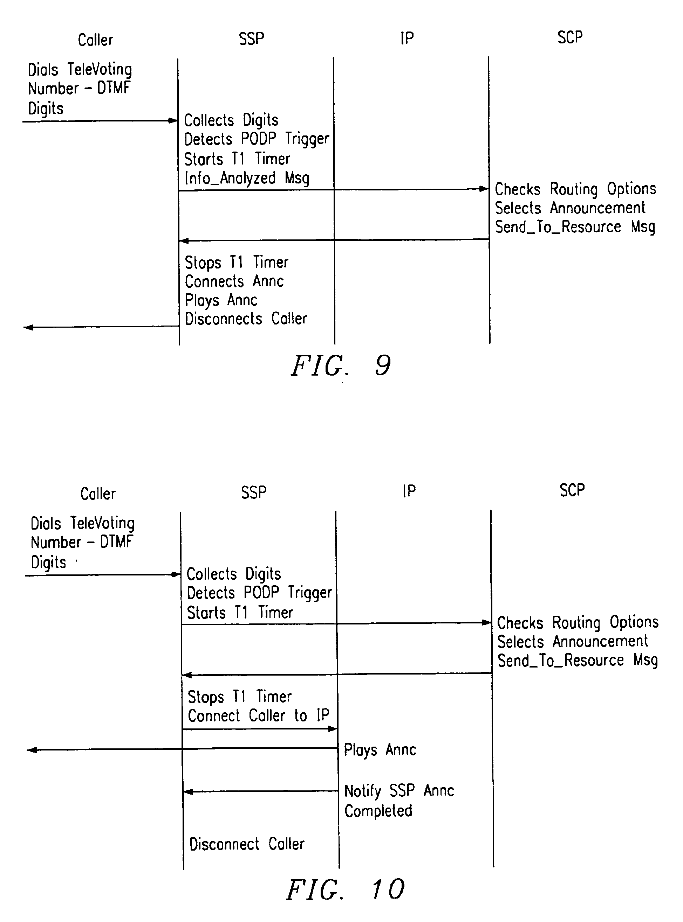

FIGURES 8-12 are message flow diagrams further illustrating several call routing scenarios. In FIGURE 8, the caller dials a televoting access number, which is received by the service switching point. The service switching point detects the PODP trigger and starts the T1 timer before sending the collected digits in an info_analyze message to the service control point. The service control point checks the routing options and selects a route indicative of a directory number. The directory number is sent to the service switching point in an analyze_route message. Upon receipt of the directory number, the service switching point stops the T1 timer and completes the call to the directory number.

In FIGURE 9, the service control point, upon its analysis of routing options selects an appropriate announcement in response to the call. The announcement specification is sent to the service switching point in a send_to_resource message. The service switching point then receives the message, stops the T1 timer, and plays the selected announcement to the caller. The service switching point then disconnects the call.

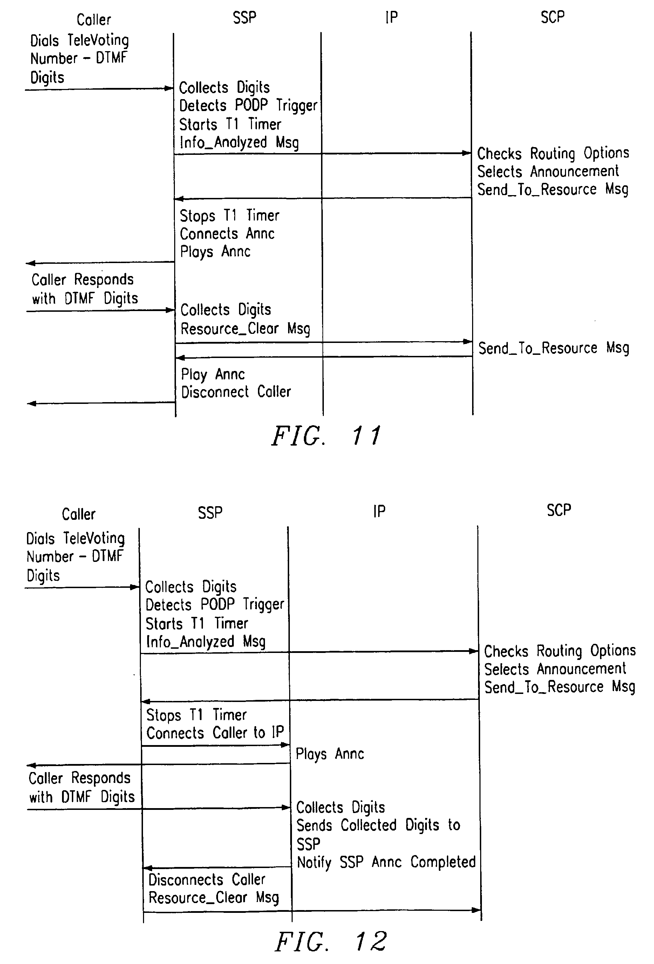

Optionally, the service switching point may request the intelligent peripheral to play the announcement in response to receiving the send_to_resource message from the service control point, as shown in FIGURE 10. The intelligent peripheral then plays the announcement and notifies the service switching point that the announcement is completed. The service switching point then disconnects the caller.

When one or more additional digits are needed to register the caller's vote, the service control point's response may be to request the service switching point or the intelligent peripheral to play an announcement to prompt the caller to enter the additional digits, as specified in a send_to_resource message, shown in FIGURES 11 and 12. The service switching point or intelligent peripheral then responds by playing the appropriate announcement to the caller. The caller then responds by dialing one or more digits representing his/her vote. These digits are then collected by the service switching point and sent to the service control point for route selection in a resource_clear message. The service control point then responds with a send_to_resource message, which requests the service switching point to play an announcement before disconnecting the caller. The announcement typically informs the caller that his/her vote has been registered or counted.

The service subscriber is further assigned an access number to update his televoting service profile. A personal identification number may also be assigned for authorization and security checks prior to allowing access to the televoting database. The intelligent peripheral may provide a menu of options for the subscriber to select and to further enter update information. The intelligent peripheral collects the data entered by the service subscriber and forwards this information to the service management system for updating the televoting service profile.

Televoting calls may be charged to either the calling party or the service subscriber. If the call is billed to the calling party, the charge may be based on local or long distance call charges or a fixed rate for each call. If the call is charged to the subscriber, the charge may also be based on the cost normally associated with the local or long distance call or a fixed rate for each call.

Constructed and operating in this manner, the televoting service is extremely flexible in terms of routing options and call screening and blocking options.

Although several embodiments of the present invention and its advantages have been described in detail, it should be understood that mutations, changes, substitutions, transformations, modifications, variations, and alterations can be made therein without departing from the teachings of the present invention.

## Claims

1. A televoting service, comprising the steps of:
- receiving (50), at a service switching point (22, 24), a telephone number entered by a caller associated with a call;
- sending (58) a query to the service control point (14) coupled to the service switching point (22, 24);
- verifying (62), at the service control point (14), the received telephone number as a televoting service number for registering a vote;
- determining (64) one of a plurality of routing options for processing the call in response to service transition logic associated with the caller, the plurality of routing options including standard routing (70), originating call screening (80), origin dependent routing (100), time dependent routing (130), and call distribution (170);
- translating the telephone number to a directory number by consulting a televoting service transition logic according to the determined routing option;
- completing the call to the directory number; and
- registering the vote.

2. The televoting service, as set forth in claim 1, wherein the determined routing option is origin dependent routing, the translating step comprises the step of determining the destination number according to an origin dependent routing logic.

3. The televoting service, as set forth in claim 2, wherein the translating step comprises the steps of:
- determining the directory number according to the caller's area code-exchange code;
- determining the directory number according to the caller's area code; and/or
- determining the directory number according to the caller's region.

4. The televoting service, as set forth in claim 1, wherein the determined routing option is time dependent routing, the translating step comprises the step of determining the directory number according to a time dependent routing logic.

5. The televoting service, as set forth in claim 4, wherein the translating step comprises the steps of:
- determining the directory number according to the day of year of the call;
- determining the directory number according to the day of week of the call; and/or
- determining the directory number according to the time of day of the call.

6. The televoting service, as set forth in claim 1, wherein the determined routing option is call distribution, the translating step comprises the step of determining the directory number according to a call distribution routing logic.

7. The televoting service, as set forth in claim 6, wherein the translating step comprises the steps of:
- determining the directory number according to a circular distribution scheme;
- determining the directory number according to a proportional distribution scheme; or
- determining the directory number according to an hierarchical distribution scheme.

8. The televoting service, as set forth in claim 1, wherein the determined routing option is standard routing, the translating step comprises the step of
determining the directory number according to a standard routing logic by routing the televoting call to a predetermined primary directory number.

9. The televoting service, as set forth in claim 1, wherein the determined routing option is originating call screening, the translating step further comprising the step of blocking the televoting call according to an originating call screening logic based on the caller's area code-exchange code, area code, or region.

10. The televoting service, as set forth in claim 1, further comprising the step of sending the determined directory number to the service switching point for call completion.

11. The televoting service, as set forth in claim 1, further comprising the step of playing an announcement to the caller prior to disconnecting the call in response to being unsuccessful in translating to a directory number.

12. The televoting service, as set forth in claim 1, comprising the steps of:
- verifying, at the service control point, the received telephone number as a televoting service number for making a televoting call;
- sending the directory number to the service switching point for completing the call to the directory number; and
- registering the call to the directory number as a vote.

## Patentansprüche

1. Televotingdienst, der folgende Schritte umfasst:
- Empfangen (50) einer Telefonnummer an einem Dienstevermittlungsknoten (22, 24), die von einem Anrufer eingegeben wird, der einem Anruf zugeordnet ist;
- Senden (58) einer Anfrage an den Dienstesteuerungsknoten (14), der mit dem Dienstevermittlungsknoten (22, 24) gekoppelt ist;
- Verifizieren (62) der empfangenen Telefonnummer am Dienstesteuerungsknoten (14) als Televotingdienstnummer zum Registrieren einer Stimme.
- Bestimmen (64) einer von mehreren Lenkungsoptionen zum Bearbeiten des Anrufs in Reaktion auf Dienstübergangslogik, die dem Anrufer zugeordnet ist, wobei die mehreren Lenkungsoptionen Standardlenkung (70), Anrufsperre (80), ausgangspunktabhängige Lenkung (100), zeitabhängige Lenkung (130) und Anrufverteilung (170) beinhalten;
- Umsetzen der Telefonnummer unter Konsultieren einer Televotingdienst-Übergangslogik gemäß der bestimmten Lenkungsoption in eine Verzeichnisnummer;
- Ausführen des Anrufs zur Verzeichnisnummer und
- Registrieren der Stimme.

2. Televotingdienst, wie in Anspruch 1 dargelegt, wobei die bestimmte Lenkungsoption ausgangspunktabhängige Lenkung ist, wobei der Umsetzschritt den Schritt des Bestimmens der Zielnummer gemäß einer Logik der ausgangspunktabhängigen Lenkung umfasst.

3. Televotingdienst, wie in Anspruch 2 dargelegt, wobei der Umsetzschritt folgende Schritte umfasst:
- Bestimmen der Verzeichnisnummer gemäß der Bereichs-Vermittlungsstellennummer des Anrufers;
- Bestimmen der Verzeichnisnummer gemäß der Bereichsnummer des Anrufers und/oder
- Bestimmen der Verzeichnisnummer gemäß der Region des Anrufers.

4. Televotingdienst, wie in Anspruch 1 dargelegt, wobei die bestimmte Lenkungsoption zeitabhängige Lenkung ist, wobei der Umsetzschritt den Schritt des Bestimmens der Verzeichnisnummer gemäß einer Logik der zeitabhängigen Lenkung umfasst.

5. Televotingdienst, wie in Anspruch 4 dargelegt, wobei der Umsetzschritt folgende Schritte umfasst:
- Bestimmen der Verzeichnisnummer gemäß dem Jahrestag des Anrufs;
- Bestimmen der Verzeichnisnummer gemäß dem Wochentag des Anrufs und/oder
- Bestimmen der Verzeichnisnummer gemäß der Tageszeit des Anrufs.

6. Televotingdienst, wie in Anspruch 1 dargelegt, wobei die bestimmte Lenkungsoption Anrufverteilung ist, wobei der Umsetzschritt den Schritt des Bestimmens der Verzeichnisnummer gemäß einer Anrufverteilungslogik umfasst.

7. Televotingdienst, wie in Anspruch 6 dargelegt, wobei der Umsetzschritt folgende Schritte umfasst:
- Bestimmen der Verzeichnisnummer gemäß einem Rundverteilungsschema;
- Bestimmen der Verzeichnisnummer gemäß einem Proportionalverteilungsschema oder
- Bestimmen der Verzeichnisnummer gemäß einem hierarchischen Verteilungsschema.

8. Televotingdienst, wie in Anspruch 1 dargelegt, wobei die bestimmte Lenkungsoption Standardlenkung ist, wobei der Umsetzschritt den Schritt des Bestimmens der Verzeichnisnummer gemäß einer Standardlenkungslogik umfasst, wobei der Televoting-Anruf zu einer vorgegebenen primären Verzeichnisnummer gelenkt wird.

9. Televotingdienst, wie in Anspruch 1 dargelegt, wobei die bestimmte Lenkungsoption Anrufsperre ist, wobei der Umsetzschritt ferner den Schritt des Blockierens des Televoting-Anrufs gemäß einer Anrufsperrlogik umfasst, die auf der Bereichs-Vermittlungsstellennummer, der Bereichsnummer oder der Region des Anrufers basiert.

10. Televotingdienst, wie in Anspruch 1 dargelegt, der ferner den Schritt des Sendens der ermittelten Verzeichnisnummer zum Dienstevermittlungsknoten zur Anrufausführung umfasst.

11. Televotingdienst, wie in Anspruch 1 dargelegt, der ferner den Schritt des Abspielens eines Ansage für den Anrufer vor dem Trennen des Anrufs in Reaktion darauf umfasst, beim Umsetzen in eine Verzeichnisnummer nicht erfolgreich zu sein.

12. Televotingdienst, wie in Anspruch 1 dargelegt, der folgende Schritte umfasst:
- Verifizieren der empfangenen Telefonnummer am Dienstesteuerungsknoten als Televotingdienstnummer zum Tätigen eines Televoting-Anrufs;
- Senden der Verzeichnisnummer zum Dienstevermittlungsknoten zum Ausführen des Anrufs zur Verzeichnisnummer; und
- Registrieren des Anrufs zur Verzeichnisnummer als Stimme.

## Revendications

1. Service de télévote, comprenant les étapes consistant à :
- recevoir (50), au niveau d'un point de commutation de service (22, 24), un numéro de téléphone entré par un appelant associé à un appel ;
- envoyer (58) une requête au point de contrôle de service (14) couplé au point de commutation de service (22, 24) ;
- vérifier (62), au niveau du point de contrôle de service (14), le numéro de téléphone reçu comme un numéro de service de télévote pour enregistrer un vote ;
- déterminer (64) une d'une pluralité d'options de routage pour traiter l'appel en réponse à une logique de transition de service associée à l'appelant, la pluralité d'options de routage incluant un routage standard (70), un triage des appels de départ (80), un routage dépendant de l'origine (100), un routage dépendant du temps (130), et une distribution d'appels (170) ;
- traduire le numéro de téléphone en un numéro d'annuaire en consultant une logique de transition de service de télévote selon l'option de routage déterminée ;
- établir l'appel vers le numéro d'annuaire ; et
- enregistrer le vote.

2. Service de télévote selon la revendication 1, dans lequel l'option de routage déterminée est un routage dépendant de l'origine, l'étape de traduction comprend l'étape consistant à déterminer le numéro de destination selon une logique de routage dépendant de l'origine.

3. Service de télévote selon la revendication 2, dans lequel l'étape de traduction comprend les étapes consistant à :
- déterminer le numéro d'annuaire selon l'indicatif de zone-indicatif de central de l'appelant ;
- déterminer le numéro d'annuaire selon l'indicatif de zone de l'appelant ; et/ou
- déterminer le numéro d'annuaire selon la région de l'appelant.

4. Service de télévote selon la revendication 1, dans lequel l'option de routage déterminée est un routage dépendant du temps, l'étape de traduction comprend l'étape consistant à déterminer le numéro d'annuaire selon une logique de routage dépendant du temps.

5. Service de télévote selon la revendication 4, dans lequel l'étape de traduction comprend les étapes consistant à :
- déterminer le numéro d'annuaire selon le jour de l'année de l'appel ;
- déterminer le numéro d'annuaire selon le jour de la semaine de l'appel ; et/ou
- déterminer le numéro d'annuaire selon l'heure du jour de l'appel.

6. Service de télévote selon la revendication 1, dans lequel l'option de routage déterminée est une distribution d'appels, l'étape de traduction comprend l'étape consistant à déterminer le numéro d'annuaire selon une logique de routage de distribution d'appels.

7. Service de télévote selon la revendication 6, dans lequel l'étape de traduction comprend les étapes consistant à :
- déterminer le numéro d'annuaire selon un schéma de distribution circulaire ;
- déterminer le numéro d'annuaire selon un schéma de distribution proportionnelle ; ou
- déterminer le numéro d'annuaire selon un schéma de distribution hiérarchique.

8. Service de télévote selon la revendication 1, dans lequel l'option de routage déterminée est un routage standard, l'étape de traduction comprend l'étape consistant à déterminer le numéro d'annuaire selon une logique de routage standard en acheminant l'appel de télévote vers un numéro d'annuaire primaire prédéterminé.

9. Service de télévote selon la revendication 1, dans lequel l'option de routage déterminée est un triage des appels de départ, l'étape de traduction comprenant en outre l'étape consistant à bloquer l'appel de télévote selon une logique de triage des appels de départ basée sur l'indicatif de zone-indicatif de central, indicatif de zone, ou région de l'appelant.

10. Service de télévote selon la revendication 1, comprenant en outre l'étape consistant à envoyer le numéro d'annuaire déterminé au point de commutation de service pour l'établissement de l'appel.

11. Service de télévote selon la revendication 1, comprenant en outre l'étape consistant à passer une annonce à l'appelant avant de déconnecter l'appel en réponse à l'échec de la traduction en un numéro d'annuaire.

12. Service de télévote selon la revendication 1, comprenant les étapes consistant à :
- vérifier, au niveau du point de contrôle de service, le numéro de téléphone reçu comme un numéro de service de télévote pour effectuer un appel de télévote ;
- envoyer le numéro d'annuaire au point de commutation de service pour établir l'appel vers le numéro d'annuaire ; et
- enregistrer l'appel au numéro d'annuaire comme un vote.
